# EUROPEAN PATENT SPECIFICATION

(11) **EP 0 434 829 B1**
(45) Date of publication and mention of the grant of the patent: **16.02.1994**
(21) Application number: 90917790.9
(22) Date of filing: 27.06.1990
(51) Int. Cl.: B60J 3/02

(54) **HINGE FOR SUN VIZORS OF MOTOR VEHICLES**
Scharnier für eine Sonnenblende eines Kraftfahrzeuges
CHARNIERE POUR VISIERES PARE-SOLEIL DE VEHICULES AUTOMOBILES

(30) Priority: 03.07.1989 ES 8902176
(43) Date of publication of application: 03.07.1991
(73) Proprietor: FICO I.T.M., S.A., E-08027 Barcelona (ES)
(72) Inventor: GABAS CEBOLLERO, Carlos, E-08029 Barcelona (ES)
(74) Representative: Schwabe - Sandmair - Marx
(86) International application number: PCT/ES90/00022
(87) International publication number: WO 91/00190

(56) References cited:
- DE-A- 2 234 440
- GB-A- 2 154 192
- US-A- 4 707 019

## Description

The present invention relates to a hinge for motor vehicle sun visors designed for connecting the sun visor to the support shaft attached to the vehicle structure and on which said visor may be pivotably mounted, according to the preamble of claim 1. (Hinge of the type known e.g. from US-A-4,707,019).

Embodiments are known which provide various solutions to the connection between the sun visor with which motor vehicles are normally eouipped and the support shaft attached to the vehicle structure on which they are pivotably mounted and, in particular, when said sun visor is formed by a body member injection moulded from materials such as, for example, polyurethane foam, which have a limited mechanical strength, and by a structural reinforcement metal frame comprising a rod, the perimeter of which coincides with and/or is adapted to the contour of the sun visor.

Among these known embodiments, there may be cited the spanish utility model ES-U-276,823 "New hinge for motor vehicle sun visors" and the spanish utility model ES-U-275,684 "Reinforced hinge for pivotably mounting motor vehicle sun visors". Said utility model ES-U-276,823 teaches an injection moulded plastics body member together with a metal rod forming the sun visor frame and having a spring to retain the support shaft on which said sun visor is pivotably mounted. Utility model ES-U-275,684 teaches a body member also produced from plastics material mechanically attached to the metal rod forming the sun visor frame and which is externally provided with a retaining spring for the support shaft on which the sun visor is pivotably mounted.

These two prior utility models ES-U-276,823 and 275,684 have as a common functional feature the fact that once the hinge is connected to the metal rod from which the sun visor structural reinforcement frame is formed, it is not possible to separate both components, i.e., the hinge from the metal rod.

Such functional feature is considered when the material forming the sun visor body member has not yet been injection moulded together with the metal rod attached to the hinge, but during the assembly process of such components. This is logically a nctable drawback against optimisation of the production processes and storage of finished product, with the resulting cost increase, since such common functional feature prevents exchange of these components once they are assembled, when so required by the production process in order to adapt it to the current demand.

From US-A-4,707,019 a sun visor for vehicles is known which comprises a mounting housing including a spring to receive and hold an axle stub therein. A frame of the known sun visor, in particular an end section of the wire surrounding the whole periphery of the known sun visor, is secured by means of detent lugs at the mounting housing. One of the wire sections of the sun visor is received in a smaller cross-section insertion opening and is in engagement with the spring. It is not possible to mount this prior art sun visor hinge without involving several difficult steps. The end of the straight wire section must be inserted into one opening of the housing of the hinge. An opening in the spring is to be brought into engagement with the end of the straight wire section. Furthermore, several detent lugs are to be brought into engagement with the other end of the wire of the sun visor frame. As can be seen, it is very troublesome to mount this known sun visor hinge.

It is an object of the present invention to overcome the shortcomings of the known hinges for motor vehicle sun visors, which can then in particular be mounted more easily.

This object is solved by a hinge for motor vehicle sun visors as defined by the features of claim 1.

Suitable embodiments of the hinge according to the present invention are defined by the features listed in the subclaims.

It is an advantage of the hinge according to the invention that the hinge, which connects the sun visor to the support shaft on which the sun visor is pivotably mounted, is separated from the metal rod, forming the structural reinforcement frame of the sun visor, once both, hinge and metal rod, are coupled together and prior to injection moulding of the material forming the body member of the sun visor, there is disclosed a hinge for motor vehicle sun visors, having an original design, structure and functionality.

It is furthermore advantageous if the mechanical reinforcement means designed for ensuring the firm attachment of the one-piece body member to the sun visor body member is formed on the side of the one-piece body member extending perpendicularly to the axis of pivoting of the sun visor and comprises a plurality of suitably dimensioned fins disposed on the perimeter of said extension.

The hinge for motor vehicle sun visors of the invention can furthermore be improved in that the housing designed for receiving the alternative mechanical means for holding and retaining the support shaft on which the sun visor is pivotably mounted is formed on the side of the one-piece body member extending longitudinally of the axis of pivoting of the sun visor and is suitably dimensioned to receive springs having a shape and mechanical properties variable in accordance with each particular case of application.

An advantageous hinge for motor vehicle sun visors according to the invention is illustrated in the drawing sheet accompanying the present description, in which:

Figure 1 is a front view of the object of the invention attached to the open-perimeter metal rod forming the sun visor frame.

Figure 2 is a side view of the object of the invention connected to the said metal rod.

Figure 3 is a cross section view on the line III-III of Figure 1.

Figures 4 is a detail of the object of the invention showing another embodiment of the mechanical reinforcement means.

Figure 5 is a cross section view on the line V-V of Figure 4.

Figure 6 is a cross section view of another embodiment of the mechanical reinforcement means of the object of the invention.

Figures 7 and 8 are views, partly in section, of the object of the invention incorporating different springs for holding and retaining the support shaft (not shown in the figures) on which the sun visor is pivotably mounted.

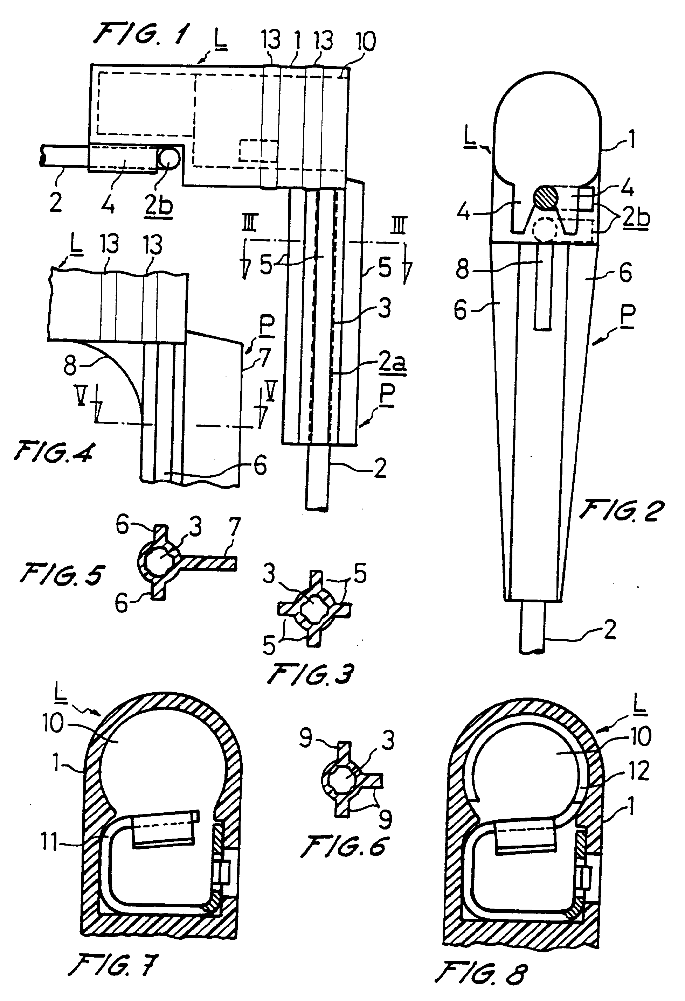

The hinge for motor vehicle sun visors of the invention herein described as one example of an embodiment is formed as shown in Figure 1 of the accompanying drawing sheet by a one-piece L-shaped body member 1, preferably made from plastics materials having mechanical properties appropriate for each particular application.

In said body member 1 there is formed the mechanical means designed to receive the free ends of the metal rod having an open perimetral contour and which is shown in part in Figures 1 and 2.

On side P of the body member 1, which as shown in Figures 1, 2 and 4 extends perpendicularly to the axis of pivoting of the sun visor, there is formed the longitudinal housing 3 in which the free end 2a of the metal rod 2 may be slidingly snugly inserted to a sufficient extent.

It is on the side L of the body member 1, which as shown in Figures 1, 2 and 4 extends longitudinally to the axis of pivoting of the sun visor where there are formed, in this embodiment, two longitudinal tabs 4 which house and retain the free end 2b of the metal rod 2 as shown in Figures 1 and 2 of the drawing sheet. This free end 2b has been previously shaped by an L-shaped bend, as shown in Figures 1 and 2, so that once it is inserted in the housing formed by the longitudinal tabs 4 no longitudinal movement of the said free end 2b and, consequently, of the metal rod 2 is possible.

In this way, the joint operation of the longitudinal housing 3 and the two longitudinal tabs 4 firmly attaches the body member 1 to the metal rod 2 forming the sun visor frame, although, as will be appreciated, this firm attachment is in no way irreversible and at any time prior to injection moulding of the material forming the sun visor body member (which is not shown in the drawing sheet) both the body member 1 and the metal rod 2 may easily be separated from one another, even without the aid of tools.

The reinforcement means for the hinge for motor vehicle sun visors of the invention is formed on the side P of the body member 1, as shown in Figures 1, 2, 3, 4, 5 and 6 of the accompanying drawing sheet.

According to one embodiment, shown in Figures 1 and 3, the reinforcement means is formed by four evenly distributed, constant section fins 5 extending coextensively with the side P of the body member 1.

According to another embodiment, shown in Figures 2, 4 and 5, the reinforcement means comprises two tapering fins 6 and a constant section fin 7 which is larger than the former, said fins 6 and 7 extending coextensively with the side P of the body member 1. The reinforcement means also comprises, in this case, the gusset 8 acting as support member for the side L of said body member 1. According to the preferred embodiment illustrated in Figure 6, the reinforcement means comprises three constant section fins 9 extending ccextensively with the side L of the body member 1.

The election of one embodiment or another of the above described reinforcement means of the hinge of the invention will depend in each particular case of application on the mechanical demands contemplated in terms of the shape and integral composition of the sun visor.

In the side L of the body member 1 there is formed the housing 10 designed for locating the mechanical holding and retaining means for the support shaft (not shown in the drawings) on which the sun visor is pivotably mounted and, obviously, to a sufficient extent, the support shaft itself, as shown in Figures 1, 7 and 8 of the accompanying drawing sheet.

Figures 7 and 8 show the longitudinal housing 10 which, in the embodiment described here, is dimensioned to house at lea the spring 11 corresponding to utility model 292,644 (See also DE-A-3 706 091, of the same applicant, as shown in Figure 7, or the spring 12 corresponding to patent P 8900980, also of the same applicant, as shown in Figure 8 (See DE-A-4 008 368).

Use will be made of the spring 11 as a holding and retaining means for the support shaft on which the sun visor is pivotably mounted in cases where the mechanical demands on the sun visor in the form of moments acting on the said support shaft are small and, in particular, less than 1.2 Nm, while the use of spring 12 will be required in the cases where said moments are in excess of the aforesaid value of 1.2 Nm.

The two perimetral reinforcement bands 13, which are formed in the side L of the body member 1 as shown in Figures 1 and 4 of this embodiment are for conferring a greater structural strength on the longitudinal housing 10 which, as stated above, is designed to locate the holding and retaining means for the support shaft on which the sun visor is pivotably mounted as well as the support shaft itself.

## Claims

1. A hinge for motor vehicle sun visors wherein
a) said hinge is formed by an essentially L-shaped one-piece body member (1) in which there are formed the mechanical means (3, 4) designed for receiving the corresponding free ends (2a, 2b) of the open perimeter metal rod (2) forming the sun visor frame;
b) mechanical reinforcement means to ensure the firm connection of the one-piece body member (1) with the sun visor body member;
c) a housing (10) receives mechanical means (11, 12) for holding and retaining the support shaft on which the sun visor is pivotably mounted;
characterized in that
d) a longitudinal housing (3) is disposed in the side (P) of the one-piece body member (1) extending perpendicularly to the pivot axis of the sun visor, in which the corresponding free end (2a) of the said metal rod (2) may be slidingly and snugly inserted to a sufficient extent; and
e) longitudinal tabs (4) for housing and retaining the other free end (2b) of said metal rod (2) are formed on the side (L) of the one-piece body member (1) extending longitudinally to the pivot axis of the sun visor.

2. The hinge for motor vehicle sun visors according to claim 1, characterised in that the mechanical reinforcement means designed for ensuring the firm attachment of the one-piece body member (1) to the sun visor body member is formed on the side (P) of the one-piece body member (1) extending perpendicularly to the axis of pivoting of the sun visor and comprises a plurality of suitably dimensioned fins (5 or 6, 7 or 9) disposed on the perimeter of said extension (P).

3. The hinge for motor vehicle sun visors according to one of claims 1 or 2, characterised in that the housing (10) designed for receiving the alternative mechanical means for holding and retaining the support shaft on which the sun visor is pivotably mounted is formed on the side (4) of the one-piece body member (1) extending longitudinally of the axis of pivoting of the sun visor and is suitably dimensioned to receive springs (11,12) having a shape and mechanical properties variable in accordance with each particular case of application.

## Patentansprüche

1. Scharnier für Kraftfahrzeug-Sonnenblenden mit folgenden Merkmalen:
a) das Scharnier ist aus einem im wesentlichen L-förmigen einteiligen Körperbauteil (1) ausgebildet, in welchem die mechanischen Einrichtungen (3, 4) ausgeformt sind, welche zur Aufnahme der entsprechenden freien Enden (2a, 2b) der den Sonnenblendenrahmen bildenden Metallstange (2) mit offenem Umfang ausgelegt sind;
b) eine mechanische Verstärkungsvorrichtung stellt die feste Verbindung des einteiligen Körperbauteils (1) mit dem Sonnenblendenkörperbauteil sicher;
c) ein Gehäuse (10) nimmt mechanische Vorrichtungen (11, 12) zum Halten und Zurückhalten des Trägerschaftes auf, an welchem die Sonnenblende schwenkbar befestigt ist;
**dadurch gekennzeichnet, daß**
d) ein longitudinales Gehäuse (3) in der sich rechtwinklig zur Sonnenblenden-Schwenkachse erstreckenden Seite (P) des einteiligen Körperbauteils (1) angeordnet ist, in welchem das entsprechende freie Ende (2a) der Metallstange (2) gleitbar und satt passend bis zu einem hinreichenden Maß eingesetzt ist; und daß
e) longitudinale Ansätze (4) zur Unterbringung und zum Zurückhalten des anderen freien Endes (2b) der Metallstange (2) an der sich in Längsrichtung zur Schwenkachse der Sonnenblende erstreckenden Seite (L) des einteiligen Körperbauteils (1) ausgebildet sind.

2. Scharnier für Kraftfahrzeug-Sonnenblenden nach Anspruch 1, dadurch gekennzeichnet, daß die mechanische Verstärkungvorrichtung, die ausgelegt ist, um die feste Anbringung des einteiligen Körperbauteils (1) am Sonnenblendenkörperbauteil sicherzustellen, an der sich rechtwinklig zu der Schwenkachse der Sonnenblende erstreckenden Seite (P) des einteiligen Körperbauteils (1) ausgebildet ist und mehrere geeignet dimensionierten Rippen (5 oder 6, 7 oder 9) aufweist, die am Umfang der Verlängerung (P) angeordnet sind.

3. Scharnier für Kraftfahrzeug-Sonnenblenden nach einem der Ansprüche 1 oder 2, dadurch gekennzeichnet, daß das Gehäuse (10), das zur Aufnahme der alternativen mechanischen Vorrichtung zum Halten und Zurückhalten des Trägerschaftes, an welchem die Sonnenblende schwenkbar befestigt ist, vorgesehen ist, an der sich in Längsrichtung der Schwenkachse der Sonnenblende erstreckenden Seite (L) des einteiligen Körperbauteils (1) ausgebildet und geeignet dimensioniert ist, um Federn (11, 12) mit einer Form und mechanischen Eigenschaften aufzunehmen, welche gemäß jedem besonderen Anwendungsfall variierbar sind.

## Revendications

1. Charnière pour pare-soleil de véhicules à moteur, dans laquelle :
a) ladite charnière est constituée par un corps monobloc (1) substantiellement en forme de L, dans lequel sont prévus des moyens mécaniques (3, 4) destinés à recevoir les extrémités libres (2a, 2b) correspondantes de la tige métallique (2) à périmètre ouvert, formant le cadre du pare-soleil ;
b) un moyen de renforcement mécanique assure un raccordement solide du corps monobloc (1) au corps du pare-soleil ;
c) un logement (10) reçoit des moyens mécaniques (11, 12) pour porter et retenir l'axe-support sur lequel le pare-soleil est monté avec une aptitude de pivotement ;
caractérisé :
d) en ce qu'un logement longitudinal (3) est agencé dans la branche (P) du corps monobloc (1) qui s'étend perpendiculairement à l'axe de pivotement du pare-soleil, dans lequel peut être inséré, sur une longueur suffisante, l'extrémité libre (2a) correspondante de la tige métallique (2) précitée, par coulissement et de manière bien ajustée ; et
e) en ce que des pattes longitudinales (4) sont prévues sur la branche (L) du corps monobloc (1) qui s'étend dans le sens longitudinal de l'axe de pivotement du pare-soleil, en vue de recevoir et de retenir l'autre extrémité libre (2) de ladite tige métallique (2).

2. Charnière pour pare-soleil de véhicules à moteur, selon la revendication 1, caractérisée en ce que le moyen de renforcement mécanique destiné à assurer un raccordement solide du corps monobloc (1) au corps du pare-soleil, est prévu sur la branche (P) du corps monobloc (1) qui s'étend perpendiculairement à l'axe de pivotement du pare-soleil, et comprend une pluralité d'ailettes (5 ou 6, 7 ou 9) de dimensions adéquates, et disposées sur la périphérie de ladite branche (P).

3. Charnière pour pare-soleil de véhicules à moteur, selon l'une des revendications 1 ou 2, caractérisée en ce que le logement (10) appelé à renfermer le moyen mécanique destiné à recevoir et à retenir l'axe de suspension sur lequel pivote le pare-soleil, est prévu dans la branche (L) du corps monobloc (1) qui s'étend dans le sens longitudinal de l'axe de pivotement du pare-soleil, et présente des dimensions adéquates pour recevoir des ressorts (11, 12), qui ont une forme et des propriétés mécaniques qui peuvent varier en fonction de chaque cas d'application particulier.
